# EUROPÄISCHE PATENTSCHRIFT

(11) **EP 0 453 866 B1**
(45) Veröffentlichungstag und Bekanntmachung des Hinweises auf die Patenterteilung: **09.06.1993**
(21) Anmeldenummer: 91105625.7
(22) Anmeldetag: 09.04.1991
(51) Int. Cl.: B60T 17/08

(54) **Bremszylinder für Bremsanlagen von Fahrzeugen, insbesondere Nutzfahrzeugen**
Brake cylinder for vehicles, especially commercial vehicles
Cylindre de freinage pour véhicules, notamment véhicules utilitaires

(30) Priorität: 24.04.1990 DE 4012993
(43) Veröffentlichungstag der Anmeldung: 30.10.1991
(73) Patentinhaber: KNORR-BREMSE AG, 80710 München (DE)
(72) Erfinder: Siebke, Alf, W-8000 München 2 (DE); Tschewik, Herbert, W-8048 Haimhausen (DE)

(56) Entgegenhaltungen:
- EP-A- 0 218 845
- FR-A- 2 419 451

## Beschreibung

Die Erfindung betrifft einen Bremszylinder nach dem Gattungsbegriff des Patentanspruches 1 (siehe z.B. EP-A-0 218 845).

Bei der Herstellung von Bremszylindern, so z.B. von Federspeicherbremszylindern, herkömmlichen Kolbenzylindern oder kombinierten Betriebsbrems- und Federspeicherbremszylindern, welche insbesondere zur Betätigung von Bremsanlagen in Nutzfahrzeugen vorgesehen sind, werden Kolben verwendet, welche aus Kolbenrohr bzw. Kolbenstange und Kolbenkörper bestehen. Der Kolben mit Kolbenrohr oder Kolbenstange kann einteilig gefertigt sein, so als einteiliges Gußstück, oder es kann ein geteilter Kolben Verwendung finden. Bei geteiltem Kolben ist das Kolbenrohr mittels Preßsitz oder mittels anderer herkömmlicher Verbindungen mit dem Kolbenkörper verbunden, wobei im allgemeinen im Bereich der Verbindung Dichtelemente erforderlich sind, um eine zu beiden Seiten dichte Konstruktion zu schaffen.

Davon ausgehend besteht die Aufgabe der Erfindung darin, einen Bremszylinder der gattungsgemäßen Art so auszugestalten, daß der Kolben in einfacher und dennoch sicherer Weise abgedichtet mit dem Kolbenrohr bzw. der Kolbenstange verbunden werden kann. Es soll insbesondere eine absolut feste Verbindung zwischen den beiden Teilen geschaffen werden, um den Kolben verstärkt auf Zug belasten zu können. Auch soll es möglich sein, bei Verwendung eines Ausgangsmaterials bestimmter Abmessungen Kolbenrohre unterschiedlicher Länge jeweils mit einem Kolben zu verbinden, um dem Bedarf an unterschiedlichen Kolbengrößen und Bremszylinderkonstruktionen kostengünstig zu genügen.

Zur Lösung dieser Aufgabe dienen die Merkmale nach dem Kennzeichnungsteil des Patentanspruches 1.

Durch die Verbindung des Kolbenrohres mit dem Kolben im Reibschweißverfahren ist auf einfache Weise ermöglicht, eine zugfeste Verbindung bei absoluter Dichte zu erreichen. Das Reibschweißverfahren kann hierbei in bekannter Weise zur Anwendung gebracht werden, wobei eines der beiden Werkstücke - Kolbenrohr oder Kolben - in Umdrehung versetzt wird, während das jeweils andere Werkstück drehfest gehalten und mittels eines hydraulischen Zylinders oder dergleichen Zuspanneinrichtung an das sich drehende Gegenstück angepreßt wird. Vorzugweise befindet sich die Schweißfläche zwischen Kolbenrohr und Kolben im Bereich des Kolbenhalses. Durch das Reibschweißverfahren ist es möglich, Werkstücke unterschiedlicher materieller Zusammensetzung miteinander zu verbinden, so z.B. einen aus Aluminium bestehenden Gußkolben mit einem Kolbenrohr aus Stahl oder Aluminium. Ausgehend von einem Kolbenrohr ausreichender Länge ist es hierbei z.B. möglich, durch Kürzen des Kolbenrohres die Kolbenkonstruktion unterschiedlicher axialer Baulänge zu erreichen, ohne daß es in bisher üblicher Weise erforderlich wäre, Kolbenrohrabschnitte unterschiedlicher Länge gesondert zu fertigen und auf Lager zu halten. Auch die Verbindung von Kolben unterschiedlichen Durchmessers mit Kolbenrohren unterschiedlicher axialer Baulänge ist durch das Reibschweißverfahren kostengünstig ermöglicht.

Vorteilhafte Ausgestaltungen und Weiterbildungen sind in weiteren Patentansprüchen aufgeführt.

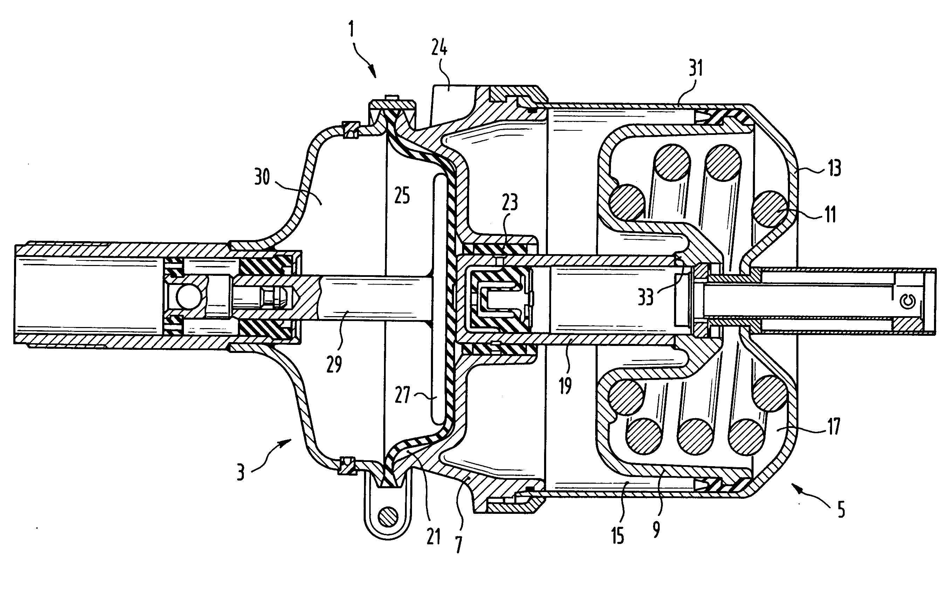

Die Erfindung ist nachfolgend anhand eines Ausführungsbeispiels unter Bezugnahme auf die beigefügte Zeichnung erläutert.

Die Zeichnung gibt in Längsschnittansicht einen gemäß der Erfindung gefertigten Bremszylinder in beispielhafter Ausgestaltung eines kombinierten Betriebsbrems- und Federspeicherbremszylinders wieder.

In der Zeichnung ist zur beispielhaften Erläuterung der Erfindung ein kombinierter Betriebsbrems-und Federspeicherbremszylinder, nachfolgend Kombizylinder 1 genannt, dargestellt. Der Kombizylinder 1 besteht aus einem Betriebsbremszylinder 3 und aus einem mit diesem baulich und funktionell verbundenen Federspeicherbremszylinder 5; der Betriebsbremszylinder und der Federspeicherbremszylinder sind durch eine Zwischenwand 7 voneinander getrennt. Innerhalb des Federspeicherbremszylinders ist ein Kolben 9 verschiebbar angeordnet, wobei an einer Seite des Kolbens 9 eine Speicherfeder 11 anliegt. Die Speicherfeder 11 stützt sich an ihrer entgegengesetzten Seite am Boden 13 des Federspeicherbremszylinders 5 ab. In die links bezüglich des Kolbens 9 bestehende Druckkammer 15 mündet ein (nicht dargestellter) Einlaß, durch welchen Druckluft eingeleitet wird, um den Kolben 9 unter Verspannung der Speicherfeder 11 nach rechts gerichtet zu verschieben. Bei dieser Verschiebung des Kolbens wird die Luft, welche innerhalb der die Speicherfeder aufnehmenden Federkammer 17 besteht, z.B. über ein (nicht dargestelltes) Rückschlagventil herausgedrückt. Wird dagegen zum Zwecke der Abbremsung der Druck in der Druckkammer 15 des Federspeicherbremszylinders bei Betätigung eines an sich bekannten, an den Einlaß der Druckkammer angeschlossenen Ventils entlastet, dann vermag die Speicherfeder 11 den Kolben 9 gemäß Darstellung in der Zeichnung nach links gerichtet zu verschieben.

Der Kolben 9 ist mit einem Kolbenrohr 19 verbunden, welches sich durch die Zwischenwand 7 in den Bereich der Druckkammer 21 des Betriebsbremszylinders 3 erstreckt. Eine in der Zwischenwand eingesetzte Dichtung 23 dichtet gegenüber der Außenwand der Kolbenstange während deren Längsbewegungen ab. In die Druckkammer 21 mündet ein Einlaß 24, über welchen zum Betätigen des Betriebsbremszylinders Druckluft eingelassen wird. Die Druckluft wirkt auf die innerhalb des Betriebsbremszylinders 3 eingesetzte Membrane 25 ein, an deren entgegengesetzter Seite ein Druckstück in Form eines Membrantellers 27 vorgesehen ist. Der Membranteller ist mit einer Druckstange 29 verbunden, die sich aus der links bezüglich der Membrane 25 bestehenden Kammer 30 des Betriebsbremszylinders erstreckt und (in nicht dargestellter Weise) mit einem Bremsbetätigungsmechanismus außerhalb des Kombizylinders zusammenwirkt. Hierbei kann es sich beispielsweise um die Betätigungsteile einer Keilspreizbremse eines Kraftfahrzeuges handeln.

Gemäß der Erfindung ist der Kolben 9 in neuartiger Weise mit der Kolbenstange 19 verbunden, d.h. die Verbindung zwischen den beiden Teilen ist im Reibschweißverfahren gebildet. Bei einem derartigen, an sich bekannten Verfahren werden zwei Werkstücke fest eingespannt, von welchen eines, z.B. die Kolbenstange 19, in Umdrehung versetzt wird. Mittels hydraulischer oder sonstiger Zuspannkräfte werden die Werkstücke, also das Kolbenrohr 19 und der Kolben 9 an ihrer gemeinsamen Schweißfläche 33 miteinander in Berührung gebracht, so daß die beiden Teile im Bereich ihrer Enden erwärmt werden. Das drehende Werkstück, also die Kolbenstange 19, wird nachfolgend abgebremst; gleichzeitig wird mit erhöhter Zuspannkraft das stationär gehaltene Teil, also der Kolben 9, angepreßt. Der erhitzte plastische Werkstoff im Bereich der beiden Werkstückenden wird hierbei nach außen verdrängt und die Verschweißung der beiden Werkstücke im Bereich der Schweißfläche 33 ist erreicht.

Das Verfahren kann auch in umgekehrter Wirkungsweise vollzogen werden, d.h. daß der Kolben 9 in Umdrehung versetzt wird, während das Kolbenrohr 19 rotationsfixiert bleibt und durch einen hydraulischen Zylinder an die gemeinsame Schweißfläche 33, d.h. an den Kolben 9 angepreßt wird.

Der Kolben 9 kann als Gußkolben aus Aluminium bestehen, während das Kolbenrohr 19 aus Stahl oder aus Aluminium besteht. Die im Reibschweißverfahren gefertigte Verbindung ist für die Funktion und für den Aufbau des Kolbens von großem Vorteil. Im besonderen ist der Kolben auf Zug belastbar, was bei Kombizylindern oder Federspeicherzylindern als wesentlicher Beitrag zum Thema Explosionssicherung zu werten ist. Für die Verbindung zwischen Kolbenrohr und Kolben ist kein gesondertes Dichtelement erforderlich, d.h. die Reibschweißverbindung ist absolut dicht. Es kann mit hoher Fertigungssicherheit gearbeitet werden, da die Verbindung nicht von hoher Maßgenauigkeit abhängt; dadurch ist eine kostengünstige Herstellung gewährleistet, d.h. es sind wenig Vorbearbeitungen und kurze Schweißzeit gegeben.

Die Erfindung ist nicht auf den vorstehend beschriebenen Kombizylinder mit seinem Kolben 9 beschränkt, d.h. die Reibschweißverbindung kann auch bei einfachen Bremszylindern, so z.B. Federspeicherbremszylinder verwendet werden. In gleicher Weise ist es möglich, bei herkömmlichen Kolbenzylinder die Verbindung zwischen Kolben und Kolbenstange oder Kolbenrohr im Reibschweißverfahren in vorbeschriebener Art auszubilden. Auch die Wahl des Materials zwischen Kolbenrohr bzw. Kolbenstange und Kolben ist nicht auf die vorgeschriebene Paarung Aluminium/Stahl beschränkt, d.h. in gleicher Weise können auch aus Aluminium bestehende Werkstücke miteinander verbunden werden oder Werkstücke anderer materieller Zusammensetzung.

### Bezugszeichenliste

- 1: Kombizylinder
- 3: Betriebsbremszylinder
- 5: Federspeicherbremszylinder
- 7: Zwischenwand
- 9: Kolben
- 11: Speicherfeder
- 13: Boden
- 15: Druckkammer
- 17: Federkammer
- 19: Kolbenrohr
- 21: Druckkammer
- 23: Dichtung
- 24: Einlaß
- 25: Membrane
- 27: Membranteller
- 29: Druckstange
- 30: Kammer
- 33: Schweißfläche

## Patentansprüche

1. Bremszylinder für Bremsanlagen von Fahrzeugen, insbesondere Nutzfahrzeugen, mit einem im Gehäuse des Bremszylinders angeordneten, durch eine Speicherfeder (11) oder durch ein Druckmittel betätigbaren Kolben (9), welcher mit einem aus dem Gehäuse des Bremszylinders sich erstreckenden, auf Bremsbetätigungselemente einwirkendenden Kolbenrohr (19) verbunden ist, dadurch gekennzeichnet, daß das Kolbenrohr (19) und der Kolben (9) im Reibschweißverfahren miteinander verbunden sind.

2. Bremszylinder nach Anspruch 1, als kombinierter Betriebsbrems- und Federspeicherbremszylinder (1) mit einem im Gehäuse des Federspeicherbremszylinders (5) angeordneten, durch eine Speicherfeder (11) betätigbaren Kolben (9), welcher auf einer Seite von einer Druckkammer (15) und auf der entgegengesetzten Seite von einer die Speicherfeder aufnehmenden Federkammer begrenzt ist, wobei sich die Speicherfeder einerseits am Kolben (9) und andererseits am Boden (13) des Gehäuses abstützt, dadurch gekennzeichnet, daß der Kolben (9) als Gußkolben aus Aluminium gefertigt ist, während das Kolbenrohr (19) aus Stahl oder Aluminium besteht.

3. Bremszylinder nach Anspruch 2, dadurch gekennzeichnet, daß die Schweißfläche (33) zwischen Kolben (9) und Kolbenrohr (19) am Hals des Kolbens (9) vorgesehen ist.

## Claims

1. Brake cylinder for brake installations in vehicles, in particular service vehicles, having a piston (9) arranged in the housing of the brake cylinder and actuatable by means of a loaded spring (11) or by a pressure medium, which piston is connected to a piston barrel (19) extending out of the housing of the brake cylinder and acting on brake actuation elements, characterised in that the piston barrel (19) and the piston (9) are joined together by friction-welding.

2. Brake cylinder according to claim 1, as a combined service brake and spring-loaded brake cylinder (1) having a piston (9) arranged in the housing of the spring-loaded brake cylinder (5) and actuatable by means of a loaded spring (11), which piston is limited on one side by a pressure chamber (15) and on the opposite side by a spring chamber receiving the loaded spring, the loaded spring being supported on one side on the piston (9) and on the other side on the base (13) of the housing, characterised in that the piston (9) is formed as an aluminium cast piston, whilst the piston barrel (19) is of steel or aluminium.

3. Brake cylinder according to claim 2, characterised in that the welding surface (33) between the piston (9) and the piston barrel (19) is provided on the neck of the piston (9).

## Revendications

1. Cylindre de frein pour des installations de freinage de véhicules, en particulier de véhicules utilitaires comportant un piston (9) disposé dans un carter du cylindre de frein et actionné par un ressort à accumulation (11) ou par milieu sous pression, ledit piston (9) étant relié à un tube de piston (19) qui s'étend au-delà du carter qu'il traverse et qui agit sur des éléments de commande du frein, caractérisé par le fait que le tube de piston (19) et le piston (9) sont reliés entre eux par la mise en oeuvre d'une soudure par friction.

2. Cylindre de frein selon la revendication 1, sous la forme d'un cylindre de frein normal et d'un cylindre de frein à ressort accumulateur combinés (1), comportant un piston (9) disposé dans le carter du cylindre de frein à ressort accumulateur (5) et actionné par un ressort accumulateur (11), lequel piston (9) est délimité, sur un côté, par une chambre de pression (15) et, sur le côté opposé, par une chambre à ressort capable de recevoir le ressort accumulateur, ledit ressort accumulateur prenant appui, d'une part, contre le piston (9) et, d'autre part, contre le fond (13) du carter, caractérisé par le fait que le piston (9) est fabriqué sous la forme d'un piston moulé en aluminium, alors que le tube de piston est fait en acier ou en aluminium.

3. Cylindre de frein selon la revendication 2, caractérisé par le fait que la surface de soudage (33) entre le piston (9) et le tube de piston (19) est prévue au niveau du col du piston (9).
